# EUROPÄISCHE PATENTSCHRIFT

(11) **EP 1 170 928 B1**
(45) Veröffentlichungstag und Bekanntmachung des Hinweises auf die Patenterteilung: **23.07.2008**
(21) Anmeldenummer: 01108741.8
(22) Anmeldetag: 06.04.2001
(51) Int. Cl.: H04M 1/02

(54) **Mobiltelefon**
Mobile telephone
Téléphone mobile

(30) Priorität: 04.07.2000 DE 10032355
(43) Veröffentlichungstag der Anmeldung: 09.01.2002
(73) Patentinhaber: IPCom GmbH & Co. KG, 82049 Pullach (DE)
(72) Erfinder: Janetzke, Helmut, 71282 Hemmingen (DE); Roth, Andreas, 75417 Muehlacker-Lomersheim (DE)
(74) Vertreter: Gigerich, Jan

(56) Entgegenhaltungen:
- EP-A- 0 603 013
- WO-A-99/04500
- US-A- 5 276 916

## Beschreibung

### Stand der Technik

Die Erfindung geht aus von einem Mobiltelefon nach der Gattung des unabhängigen Patentanspruchs. Es sind bereits Mobiltelefone bekannt, die einen Lautsprecher, ein Mikrofon und eine Antenne aufweisen. Dabei ist der Lautsprecher in einem ersten Teil des Gehäuses und das Mikrofon in einem zweiten Teil des Gehäuses angeordnet. Das erste und zweite Gehäuseteil kann gegeneinander verschoben oder gegeneinander verdreht werden, so dass der Abstand zwischen dem Lautsprecher und dem Mikrofon variabel einstellbar ist.

Die EP-A 603013 zeigt ein Mobiltelefon mit zwei gegeneinander variablen Gehäuseteilen, wobei in einem Gehäuseteil Mikrofon und Antenne, im anderen Gehäuseteil der Lautsprecher vorgesehen sein kann. Ferner wird bei Verdrehen des zweiten Gehäuseteils mit Mikrofon und Antenne das Mobiltelefon in einen so genannten OFF-HOOK-Zustand versetzt. Dieser Zustand erlaubt dem Benutzer die Sprachkommunikation mit dem Anrufer, es wird also Mikrofon und Lautsprecher Mikrofon und Lautsprecher eingeschaltet.

Die WO 9904500 zeigt ein Mobiltelefon mit zwei gegeneinander beweglichen Gehäuseteilen besteht, in welchem zum einen Antenne und Mikrofon, zum anderen Lautsprecher vorgesehen sind.

### Vorteile der Erfindung

Das erfindungsgemäße Mobiltelefon mit den Merkmalen des unabhängigen Patentanspruchs hat demgegenüber den Vorteil, dass die variable Anordnung des ersten und zweiten Gehäuseteils mit genutzt wird, um auch die Position der Antenne variabel auszugestalten. Durch eine variable Anordnung der Antenne ist es möglich, in störungsempfindlicher Umgebung die Antenneneigenschaften zu verbessern und so die Verbindung des Mobiltelefons zu einer Basisstation zu verbessern.

Durch die in den abhängigen Patentansprüchen aufgeführten Maßnahmen sind vorteilhafte Weiterbildungen und Verbesserungen des Mobiltelefons möglich. Der erste und zweite Gehäuseteil kann insbesondere gegeneinander verschiebbar oder relativ zueinander klappbar ausgestaltet werden. Der erste Gehäuseteil weist üblicherweise zusätzlich noch eine Tastatur und ein Display auf. Üblicherweise ist der erste Gehäuseteil größer ausgebildet als der zweite Gehäuseteil, da der Lautsprecher von sich aus größere Abmessungen aufweist als das Mikrofon. Besonders einfach ist der zweite Gehäuseteil ausgebildet, wenn er nur die Antenne, das Mikrofon und Zuleitungen für die Antenne und das Mikrofon enthält.

### Zeichnungen

Ausführungsbeispiele der Erfindung sind in den Zeichnungen dargestellt und in der nachfolgenden Beschreibung näher erläutert. Es zeigen Figur 1 und Figur 2 ein erstes Ausführungsbeispiel und Figur 3 ein zweites Ausführungsbeispiel des erfindungsgemäßen Mobiltelefons.

### Beschreibung

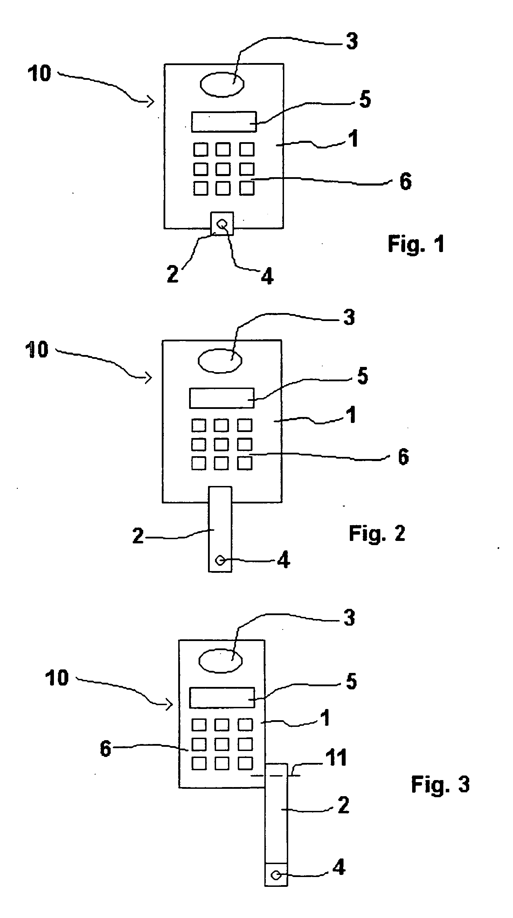

In den Figuren 1 und 2 wird ein erstes Ausführungsbeispiel des erfindungsgemäßen Mobiltelefons 10 gezeigt. Das erfindungsgemäße Mobiltelefon weist ein erstes Gehäuseteil 1 und ein zweites Gehäuseteil 2 auf. In dem ersten Gehäuseteil 1 sind ein Lautsprecher 3, ein Display 5 und eine Tastatur 6 angeordnet. Im zweiten Gehäuseteil 2 ist ein Mikrofon 4 angeordnet. Die Figuren 1 und 2 unterscheiden sich hinsichtlich der Anordnung der beiden Gehäuseteile 1 und 2 relativ zueinander. Wie in den Figuren 1 und 2 zu erkennen ist, ist das Gehäuseteil 2 als Schiebeelement ausgebildet, welches in einen entsprechenden Schacht des Gehäuseteils 1 hereingeschoben bzw. herausgeschoben werden kann. In der Figur 1 ist das zweite Gehäuseteil 2 maximal in das Gehäuseteil 1 hereingeschoben. In der Figur 2 ist das zweite Gehäuseteil 2 maximal aus dem ersten Gehäuseteil 1 herausgezogen.

Durch das Hereinziehen und Rausschieben des Gehäuseteils 2 in das Gehäuseteil 1 kann der Abstand zwischen dem Mikrofon 4 und dem Lautsprecher 3 verändert werden. Aufgrund der zunehmenden Miniaturisierung von Mobiltelefonen ist es bei kleinen Mobiltelefonen nicht mehr möglich, einen Abstand zwischen dem Lautsprecher 3 und dem Mikrofon 4 zu erreichen, der auch nur näherungsweise den Abstand zwischen dem menschlichen Ohr und Mund entspricht. Insbesondere bei starken Umgebungsgeräuschen ist es daher sehr schwierig, die Sprache des Benutzers von dem Umgebungsgeräuschen zu trennen.

Das Mobiltelefon 10 sendet und empfängt Funksignale, um eine entsprechende Verbindung mit einer hier nicht dargestellten Basisstation aufrecht zu erhalten. Das Senden und Empfangen erfolgt mittels einer Antenne. Wenn die Antenne im Inneren des Gehäuses des Mobiltelefons angeordnet ist oder aber auf der Rückseite des Mobiltelefons, so wird die Abstrahlung der Funksignale von der Antenne durch das Gehäuse und die anderen im Mobiltelefon enthaltenen Komponenten behindert. Es ist daher vorteilhaft, die Sende- und Empfangsantenne möglichst separat von den sonstigen Komponenten des Mobiltelefons anzuordnen.

Erfindungsgemäß wird nun vorgesehen, sowohl die Antenne wie auch das Mikrofon 4 im zweiten Gehäuseteil 2 anzuordnen. Die Position dieses zweiten Gehäuseteils 2 ist relativ zur Position des ersten Gehäuseteils 1 variierbar. In einem ersten Betriebszustand, der in der Figur 1 gezeigt wird, ist das Gehäuseteil 2 in das Gehäuseteil 1 eingeschoben, so dass die Antenne jetzt zumindest teilweise auch vom Gehäuseteil 1 umgeben ist und der Abstand zwischen dem Lautsprecher 3 und dem Mikrofon 4 relativ gering ist. Die Sende- und Empfangsbedingungen der Antenne und der Abstand zwischen dem Lautsprecher 3 und 4 sind daher in diesem Zustand nicht optimal aber bei geringen Anforderungen durchaus ausreichend.

In der Figur 2 ist das Gehäuseteil 2 maximal aus dem Gehäuseteil 1 herausgezogen, so dass die Sende- und Empfangseigenschaften der im Gehäuseteil 2 angeordneten Antenne nicht mehr oder nur wenig durch die im Gehäuseteil 1 angeordneten Komponenten behindert werden. Weiterhin ist in diesem Zustand der Abstand zwischen Lautsprecher 3 und Mikrofon 4 größer und daher besser an die menschliche Anatomie angepasst. Als weitere Maßnahme kann durch die räumliche Trennung von Lautsprecher 3 und dem Mikrofon 4 eine automatisch größere Lautstärke des Lautsprechers 3 gewählt werden, um dem Benutzer das Verständnis zu erleichtern (Messung durch Lagesensor oder Lärmpegel).

In den Figuren 1 und 2 ist das Gehäuseteil 2 relativ groß dargestellt. Da eine Antenne so ausgeführt werden kann, dass sie im Wesentlichen nur noch aus einem Stück Draht besteht und auch ein Mikrofon 4 als sehr kleines Bauteil ausgeführt werden kann, kann das Gehäuseteil 2 vom Durchmesser her sehr klein ausgeführt werden und besteht dann im Wesentlichen aus einem länglichen herausziehbaren Element. Dies kann beispielsweise auch elastisch ausgebildet sein.

Um die Sende- und Empfangseigenschaften der Antenne möglichst gut auszugestalten, sollte das Gehäuseteil 2 neben der Antenne und dem Mikrofon und dafür benötigter Zuleitung keine weiteren Elemente enthalten, da die wiederum zu einer Verschlechterung der Eigenschaften der Antenne führen würden. Das Gehäuseteil 2 sollte daher als Minimalelement ausgeführt sein, welches außer dem Antennenelement und dem Mikrofon 4 nichts weiter enthält.

In der Figur 3 wird ein weiteres Beispiel für ein erfindungsgemäßes Mobiltelefon gezeigt. Im Unterschied zu den Figuren 1 und 2 sind hier jedoch die Gehäuseteile 1 und 2 nicht gegeneinander verschiebbar, sondern um eine Drehachse 11 gegeneinander drehbar. Das Gehäuseteil 2 ist dazu mit einem Drehscharnier mit dem Gehäuseteil 1 verbunden, wobei in einer ersten Stellung, die in der Figur 3 nicht gezeigt wird, das Gehäuseteil 2 dann bündig an den Seiten des Gehäuseteils 1 anliegt. In einer zweiten Stellung, die in der Figur 3 dargestellt wird, ist dann das Gehäuseteil 2 durch Drehung um die Drehachse 11 so verdreht, dass der Abstand zwischen dem Lautsprecher 3 und dem Mikrofon 4 wieder vergrößert ist. In dieser Stellung wird dann die im Gehäuseteil 2 enthaltene Antenne wiederum nicht durch das erste Gehäuseteil 1 bezüglich der Sende- und Empfangseigenschaften beeinträchtigt.

## Patentansprüche

1. Mobiltelefon (10) mit einem Lautsprecher (3), einem Mikrofon (4) und einer Antenne, wobei der Lautsprecher (3) in einem ersten Gehäuseteil (1) und das Mikrofon (4) in einem zweiten Gehäuseteil (2) angeordnet ist, wobei die relative Position der beiden Gehäuseteile (1, 2) zueinander variabel ist, wobei der Abstand zwischen dem Lautsprecher (3) und dem Mikrofon (4) variabel ist und wobei die Antenne im zweiten Gehäuseteil (2) angeordnet ist, **dadurch gekennzeichnet, dass** Mittel vorhanden sind, die in Abhängigkeit von der relativen Position des ersten und zweiten Gehäuseteils (1, 2) die Lautstärke des Lautsprechers beeinflussen derart, dass mit größerem Abstand zwischen Lautsprecher (3) und Mikrofon (4) eine größere Lautstärke des Lautsprechers (3) gewählt wird.

2. Mobiltelefon nach Anspruch 1, **dadurch gekennzeichnet, dass** das erste Gehäuseteil (1) und das zweite Gehäuseteil (2) relativ zueinander verschiebbar sind.

3. Mobiltelefon nach Anspruch 1, **dadurch gekennzeichnet, dass** das erste Gehäuseteil (1) und das zweite Gehäuseteil (2) um eine Drehachse (11) relativ zueinander verdrehbar sind.

4. Mobiltelefon nach einem der vorhergehenden Ansprüche, **dadurch gekennzeichnet, dass** in dem ersten Gehäuseteil (1) zusätzlich noch eine Tastatur (6) und ein Display (5) vorgesehen sind.

5. Mobiltelefon nach Anspruch 4, **dadurch gekennzeichnet, dass** das Volumen des ersten Gehäuseteils (1) größer ist als das Volumen des zweiten Gehäuseteils (2).

6. Mobiltelefon nach einem der vorhergehenden Ansprüche, **dadurch gekennzeichnet, dass** das zweite Gehäuseteil (2) nur die Antenne, das Mikrofon (4) und Zuleitungen für die Antenne und das Mikrofon (4) enthält.

## Claims

1. Mobile telephone (10) having a loudspeaker (3), a microphone (4) and an antenna, with the loudspeaker (3) being arranged in a first housing part (1), and with the microphone (4) being arranged in a second housing part (2), with the relative position of the two housing parts (1, 2) being variable with respect to one another, with the distance between the loudspeaker (3) and the microphone (4) being variable, and with the antenna being arranged in the second housing part (2), **characterized in that** means are provided which influence the volume of the loudspeaker as a function of the relative position of the first and second housing parts (1, 2), such that a louder volume is chosen for the loudspeaker (3) as the distance between the loudspeaker (3) and the microphone (4) is increased.

2. Mobile telephone according to Claim 1, **characterized in that** the first housing part (1) and the second housing part (2) can be moved linearly relative to one another.

3. Mobile telephone according to Claim 1, **characterized in that** the first housing part (1) and the second housing part (2) can be rotated relative to one another about a rotation axis (11).

4. Mobile telephone according to one of the preceding claims, **characterized in that** a keypad (6) and a display (5) are also provided in the first housing part (1).

5. Mobile telephone according to Claim 4, **characterized in that** the volume of the first housing part (1) is larger than the volume of the second housing part (2).

6. Mobile telephone according to one of the preceding claims, **characterized in that** the second housing part (2) contains only the antenna, the microphone (4) and supply lines for the antenna and the microphone (4).

## Revendications

1. Téléphone mobile (10) comportant un haut-parleur (3), un micro (4) et une antenne,
le haut-parleur (3) étant placé dans une première partie de boîtier (1) et le micro (4) dans une seconde partie de boîtier (2),
la position relative des deux parties de boîtier (1, 2) l'une par rapport à l'autre étant variable,
la distance entre le haut-parleur (3) et le micro (4) étant variable et l'antenne est prévue dans la seconde partie de boîtier (2),
**caractérisé par**
des moyens qui, en fonction de la position relative entre la premier et la seconde partie de boîtier (1, 2), influencent le volume sonore du haut parleur de façon que pour une plus grande distance entre le haut-parleur (3) et le micro (4), le haut-parleur (3) émette avec un plus fort volume sonore.

2. Téléphone mobile selon la revendication 1,
**caractérisé en ce que**
la première partie de boîtier (1) et la seconde partie de boîtier (2) peuvent coulisser l'une par rapport à l'autre.

3. Téléphone mobile selon la revendication 1,
**caractérisé en ce que**
la première partie de boîtier (1) et la seconde partie de boîtier (2) peuvent tourner l'une par rapport à l'autre suivant un axe de rotation (11).

4. Téléphone mobile selon l'une des revendications précédentes,
**caractérisé en ce que**
la première partie de boîtier (1) comporte en plus un clavier (6) et un afficheur (5).

5. Téléphone mobile selon la revendication 4,
**caractérisé en ce que**
le volume de la première partie de boîtier (1) est plus grand que le volume de la seconde partie de boîtier (2).

6. Téléphone mobile selon l'une des revendications précédentes,
**caractérisé en ce que**
la seconde partie de boîtier (2) comporte seulement l'antenne, le micro (4) et les lignes d'alimentation de l'antenne et du micro (4).
